# EUROPEAN PATENT APPLICATION

(11) **EP 1 248 184 A1**
(43) Date of publication of application: **09.10.2002**
(21) Application number: 01108314.4
(22) Date of filing: 02.04.2001
(51) Int. Cl.: G06F 3/033, H04M 1/247, G09G 5/00

(54) **Mobile terminal and method for scaling an option list of an application software**

(71) Applicant: Nokia Corporation, 02150 Espoo (FI)
(72) Inventor: Lindholm, Christian, FIN-00150 Helsinki (FI)
(74) Representative: Becker Kurig Straus

(57) **Abstract**

A method is provided for scaling an option list of an application on an application user interface of an mobile terminal device. The option list includes options chosen from a given set, and the method comprises the following steps: detecting the size of the application on the interface, determining the number of options included in the option list according to the determined size, and displaying the option list within the application. Furthermore a computer program comprising program means performing these steps and a computer program product comprising program means stored on a computer readable medium for performing the method are provided. Furthermore a mobile terminal device for supporting application user interfaces of different resolution and/or size is provided, comprising an application on the application user interface having an option list scaled according to the provided method.

## Description

The present invention relates to wireless terminal devices, in particular to wireless terminal devices having access to networks such as the Internet and more particular to wireless terminal devices using WWW and/or WAP browsers.

Mobile communication devices such as mobile telephones have become very popular and are increasingly capable of providing much more than mere telephone access. Devices have been developed which allow a user to access communication networks such as the Internet from their mobile device. An internet interface e.g. the WAP standard defines a system architecture, a protocol and an application environment for transmitting and displaying of WWW-resembling pages on wireless terminal devices.

The applicant has filed co-pending U.S. Patent applications Serial No. 09/607,637 and Serial No. 09/659,416 which both describe a mobile display appliance (MDA) system entitled "Network with mobile terminals as browsers having wireless access to the Internet and method for using same" which allows access to the Internet from a variety of wireless terminals. In addition the applicant has filed co-pending U.S. Patent application Serial No. 09/609,581, entitled "Network with mobile terminals having wireless access to Internet and method for doing the same", all these documents dealing with the problem, which information the user is having access to, and how the terminal is interacting with a communication network. Yet, there exist a large variety of wireless terminal devices and they usually support different screens with different resolutions (e.g. Nokia mobile phones 2110, 6110, 9110). Thus differently sized application user interfaces such as a browser have to be supported on differently sized displays. Consequently one of the biggest challenges in future when implementing the mobile information society is the adaptability with numerous differently sized application user interfaces, due to the broad offering of mobile terminals, displays and application user interfaces. With current technology each application would have to be redesigned for each display and/or application user interface. In the WO 99/57657 a system is provided for improving data transmission to computers and computerized appliances connected directly to a network; in this system software at a proxy server uses pre-stored characteristics of client devices to translate data from network sources into a reduced content form adapted specifically to client devices. Systems are provided for many sorts of client devices and host devices. One of the problems of this method consists in the server always having to know to properties of the device used. If one device connected to the network is replaced by a device having different properties, the server must receive appropriate information.

The object of the present invention therefore is to solve the problem of application scalability in a multi device and multi browser environment, so as to save significant amount of application design time and application implementation time during application development since an application can be reused in terminals with different display resolution and/or size.

Accordingly, the present invention provides a method for scaling an option list of an application on an application user interface of a mobile terminal, which option list includes options chosen from a set of options, according to claim 1. It comprises the steps of detecting a size of the application on the application user interface, determining a number of options included in the option list depending on the size of the application and fitting said size, and displaying an option list containing the determined number of options within the application on the application user interface. The method assures that an application always has as many options in its option list as appropriate for its proper size. The option is chosen from a given set of options, such as commands or operations, which may be predetermined during the application design.

Yet in another preferred embodiment of the present invention, new option items may be added to the given set of options of an application later on, if desired. The detection of the size of the application is necessary to determine how many options could possibly be displayed within the option list of the application.

Preferably, the method comprises a further step of detecting a resolution and/or size of the application user interface and re-scaling the size of the application accordingly. If e.g. the application user interface is a that is resized, the application will be resized so as to fit into the application user interface. In consequence the number of options in the option list of the application is determined anew.

Advantageously, the method assures that at least a single option is always included in the option list. When this option is chosen, all options of the given set of options are displayed. Thus a user will always be able to access a list of all available options, even if the application is sized as small as possible to allow for the display of a single option in the option list only.

Preferably, the method further comprises a step of removing at least one option from the option list if the size of the application decreases, so as to adapt the number of options in the option list to the size of the application. The same method advantageously further comprises a step of adding at least one additional option selected from the given set of options to the option list if the size of the application increases, so as to adapt the number of options in the option list to the size of the application. Advantageously, the method is provided, so that the number of options in the option list adapts dynamically, if a user scales the application or the application user interface. Thus the application can be resized according to the method of the present invention on the fly and the option list is re-scaled accordingly. Preferably the option list adapts dynamically if the user connects the mobile terminal device to another and/or other display. Thus it might be possible to have an additional screen or display that might be connected to the mobile terminal device. It may have different features, such as a higher resolution and/or size. According the method of the present invention, the application is thus displayed having an option list sized according to the properties of the external display.

Advantageously the options in the option list are ordered according to their frequency of use. This arrangement provides the user a convenient way to browse through the option list.

According to another aspect of the present invention, a computer program is provided, by which implementation a software method for scaling an option list of an application on an application user interface of a mobile terminal device can be executed. By using a computer program for the execution of the method for scaling an option list of an application on an application user interface of a mobile terminal device, the method can easily be implemented in a computer or in a mobile terminal device

According to another aspect of the invention, a computer program product is provided contains a computer readable medium which stores a program for the execution of a method for scaling an option list of an application on a application user interface of a mobile terminal device.

According to yet another aspect of the invention, a mobile terminal device for supporting application user interfaces of different size or resolution is provided, comprising a display for displaying the application user interface, a detecting means for detecting the resolution and/or size of the application user interface and the size of applications on the application user interface, and a scaler means operating with the application user interface and the application on the application user interface for scaling a number of options of an option list.

Preferably, the mobile terminal device further comprises an application on the application user interface having an option list, in which the number of options is scaled by the scaler means in accordance with the above referred method.

According to yet another aspect of the invention a communication system is provided, comprising at least one mobile terminal device according to the present invention; an access point in mobile communication network for the mobile terminal device and forming part of a network; and preferably further comprising a server connected to the network. Preferably, the communication network comprises further a connection from the access point or the server to the Internet. Thus, WWW applications may be retrieved from the communication network or from the Internet and executed on the pre-referred mobile terminal device. Applications on the application user interface of the mobile terminal are thus scalable according the pre-referred method.

Moreover in an additional embodiment the application can be adapted according to the mobile terminal device's properties. This procedure actually changes the physical size of the application, i.e. the size of the source code and the eventually compiled executable application. The procedure comprises a step of developing a version of the application including the incorporation of all possible options, libraries, functions, etc. into the source code. If the application is compiled, so as to run on a specific mobile terminal device, it may be deprived of all those options, libraries, functions, etc., that are not needed on the mobile terminal device, such as depriving an application of all color adjusting options or functions if it is compiled, so as to run on an mobile terminal device having a monochrome display. The advantage of this procedure is self explaining since mobile terminal devices such as mobile phones may have very little storage space. Yet it should be noted that both, the application including all options, libraries, functions, etc. and the deprived version of the application, are still executable in any mobile terminal device.

In another additional embodiment of the present invention, the mobile terminal device may have a number of different displays, such as the Nokia 9110 Communicator or the Nokia 9210 communicator. These have two displays, a smaller telephone display and a larger personal digital assistant (PDA) display. The telephone display can be seen, if the device is closed, whereas the PDA display can be seen, if the device is opened. According to the present invention an application can be displayed on both displays, yet having an respective option list displayed according to the size of the respective display.

According to yet another additional embodiment, new options removed or added to the option list can be selected from the given set of options according to their frequency of use. Hence, the options included in the option list are those the user might prefer to use, has used or has to use such as an "Exit" or "Back" key, more often than other options. If the user is selecting an option, it will be more convenient for him to find this option in the option list, than first generating a list of all options available in the given set of options. The option list may be displayed in a row, which is a part of the application user interface, and the options in the option list can ordered from left to right. Alternatively, the options may be arranged in a column and ordered from top to bottom

The options available in the given set of options can comprise commands such as executing applications, such as writing and sending an e-mail or SMS (Short Message Service) message, a calendar, or an address book, or operations, like creating or deleting messages, or to generate a further list of options, that might be context sensitive to the selected option. Alternatively, the option might generate a list of commands or operations, context sensitive to the selected option.

In another additional embodiment, the mobile terminal device may have an application user interface, such as a browser displayed on a display. On this application user interface, an application, such as writing and sending an e-mail or SMS message, a calendar, or an address book, may be displayed.

Yet according to an additional embodiment, the mobile terminal device may further comprise an application launch system so as to execute applications on the application user interface. The application launch system may enable an application selection and switching. The application launch system may comprise a tab system, such as hard keys, virtual keys like icons or virtual keys pointed with indirect input devices. If the tab is e.g. a hard key on a mobile terminal device, it could be a key which, if pressed directly, will execute an application on the application user interface, such as writing and sending an e-mail or SMS message, a calendar or an addressbook.

A more complete appreciation of the invention and many other attendant advantages thereof will be readily obtained from the following description when considered in connection with the accompanying drawings, wherein:
Figure 1 shows a preferred embodiment of the present invention including an application on an application user interface, having an option list, which application user interface is having an application launch system;
Figure 2 is a simplified block diagram of the steps of the method according to claim 1;
Figure 3 shows a scalable application structure in accordance with the present invention; and
Figure 4 shows a mobile terminal according to a preferred embodiment of the invention having an application launch system.

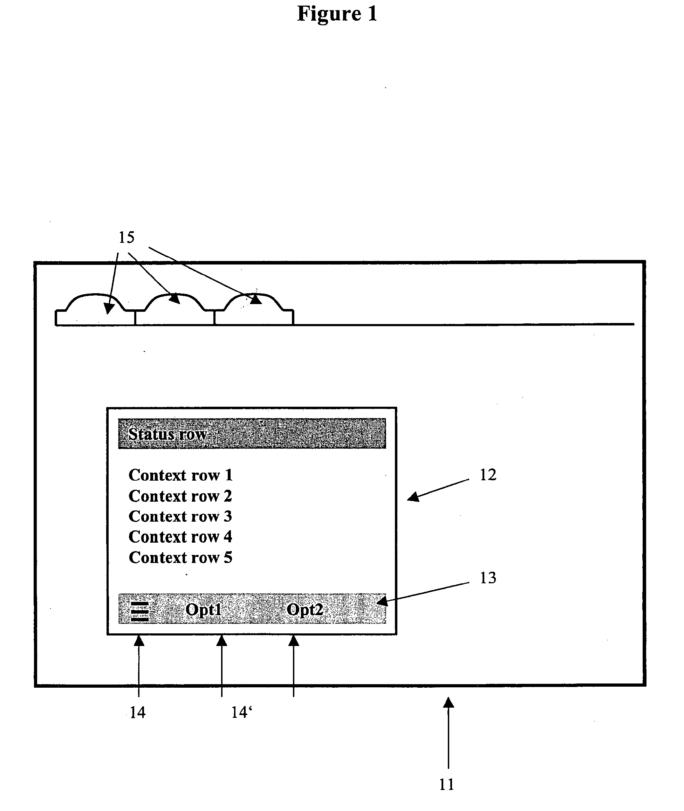

In the preferred embodiment as shown in Figure 1, the application user interface 11 of the mobile terminal device according the present invention, shows a tab system 15 of an application launch system. By means of the tab system an application 12 may be started on the application user interface 11 having an option list 13 which includes a number of options 14, 14' 14". The number of options is determined by a method according to the present invention. The option list 13 includes up to as many options as possibly can be fittingly displayed according to the size of the application within the application user interface. One key 14 may be provided, that is always included within the option list and that generates on pressing a list of all options available to be displayed on the application user interface.

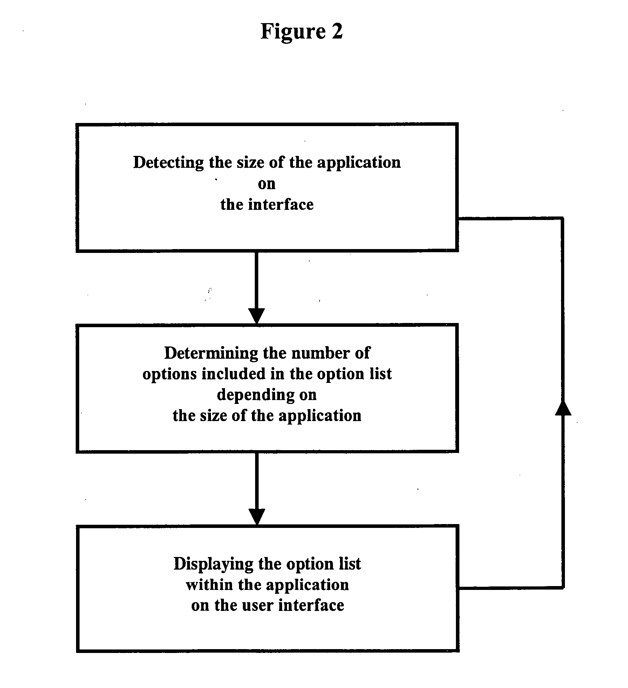

Figure 2 is a simplified block diagram of the steps of the method according the present invention. In a first step the size of the application on the application user interface is detected. Secondly, the number of options that are included in the option list depending on size of the application are determined. Thus the option list is finally displayed in the application on the application user interface, while including the determined number of options. All three steps are repeated constantly so as to allow for changing the size of the application on the fly.

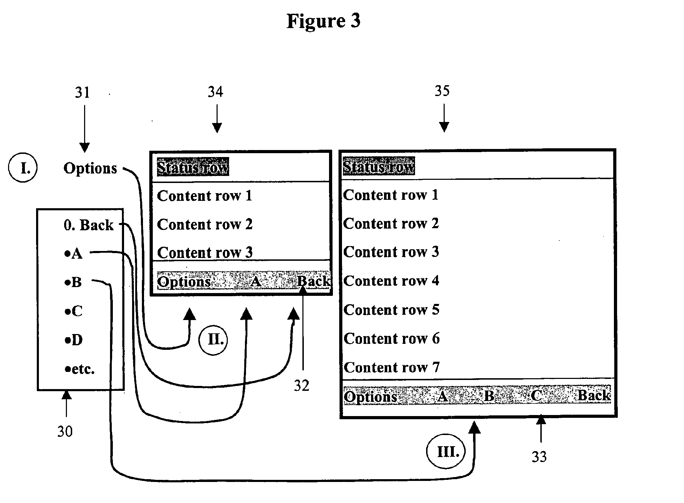

In Figure 3 a scalable application structure according to a preferred embodiment of the present invention is illustrated. Three different displayed sizes of one and the same application 34, 35 are shown. A given set of context sensitive options 30 is provided, that might be provided by the application designer or made up by the user later on, if desired. A list 31, 32, 33 of options is rendered that is displayed in the lowest row of the application 34, 35. The options might be selected from the given set of options 30 according to their frequency of use and might be ordered from left to right according to their frequency of use. In the smallest possible size in situation I. only one option 31 is present (Simplex) that generates a list of all options available in the given set of options 30. This procedure is necessary to enable the selection of all options of the application. As the size of the displayed application increases (The step leading from situation I. to situation II.), the options included in the option list 32 are re-rendered, so that they get presented in the lowest row ordered left to right. If the user scales either the application or the whole application user interface, the application adapts dynamically on the fly as shown for example in the step from situation II. to situation III. Provided that the size of the application 35 is larger than the size of the application 34, it allows for presenting more options in the option list 33 selected from the given option list 30 according to the method of the present invention.

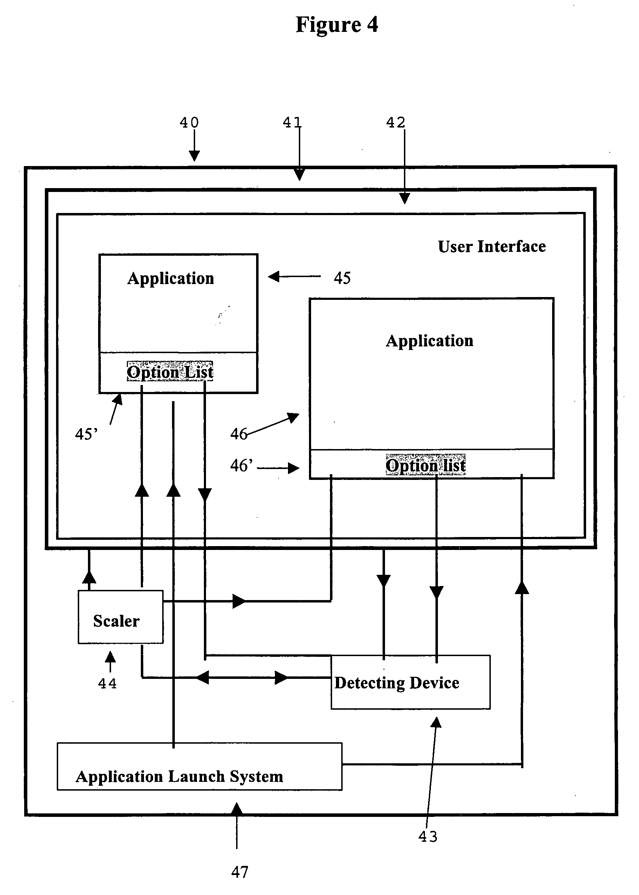

Figure 4 shows in a simplified diagram the structure of a mobile terminal device 40 according to the present invention. It comprises a display 41 for displaying the application user interface 42, like a browser; a detecting device 43 for detecting the resolution and/or size or the application user interface 42 and the size of the applications 45, 46 on the application user interface 42; and a scaler means 44 operating with the application user interface 42 and applications 45, 46 on the application user interface 42 for scaling a number of options in the option list 45', 46'.

An application 45, 46 is started by an application launch system 47 that might comprise a tab system, such as hard keys, virtual keys or virtual keys with indirect input devices. The detecting device then detects the size of the application, that might be depending on the size of the application user interface. According to the detecting device, the scaler means 44 scales the number of options in the option list 45', 46', that are displayed within the application 45, 46 on the application user interface 42. Once the application 45, 46 is resized, for instance it might be re-scaled by the user, the application user interface 42 has been resized, or the mobile terminal device might be connected to a different external display, the detection device is detecting the new size of the application and the scaler means 44 is scaling the numbers of options in the option list 46' accordingly. Consequently, the option list 45', 46' including the determined number of options is displayed within the application 45, 46.

This application contains the description of implementations and embodiments of the present invention with the help of examples. It will be appreciated by a person skilled in the art that the present invention is not restricted to details of the embodiments presented above, and that the invention can also be implemented in another form without deviating from the characteristics of the invention. The embodiments presented above should be considered illustrative, but not restricting. Thus the possibilities of implementing and using the invention are only restricted by the enclosed claims. Consequently, various options of implementing the invention as determined by the claims, including equivalent implementations, also belong to the scope of the invention.

## Claims

1. Method for scaling an option list (13) of an application (12) on an application user interface (11) of a mobile terminal device, which option list (13) includes options (14, 14', 14") chosen from a given set of options, comprising the following steps:
- detecting a displayed size of the application (12) on said application user interface (11);
- determining a number of options (14, 14', 14") included in said option list (13) depending on the displayed size of the application (12) and fitting the application having said displayed size; and
- displaying the option list (13) containing said determined number of options within the application (12) on said application user interface (11).

2. Method according claim 1, comprising further a step of detecting a resolution and/or size of said application user interface (11) and re-scaling the displayed size of the application (12) accordingly.

3. Method according claim 1 or 2, where at least an option (14) is always included into said option list (13), this option displaying all options of said given set of options, if chosen.

4. Method according any one claim 1 to 3, further comprising a step of removing at least one option from said option list (13) if the size of the application (12) decreases, so as to adapt said number of options (14, 14', 14") in said option list (13) to the size of the application (12).

5. Method according any one claim 1 to 4, further comprising a step of adding at least one additional option selected from said given set of options to said option list (13) if the size of the application (12) increases, so as to adapt said number of options (14, 14', 14") in said option list (13) to said size of the application (12).

6. Method according any one of claim 1 to 5, wherein said number of options (14, 14', 14") in said option list (13) adapts dynamically if a user scales the application (12) or said application user interface (11).

7. Method according any one of claim 1 to 6, wherein said number of options (14, 14', 14") in said option list (13) adapts dynamically if the user connects the mobile terminal device to an additional and/or external display.

8. Method according claim 1, where said given set of option includes context sensitive options.

9. Method according claim 1, where said options (14, 14', 14") in said option list (13) are ordered by their frequency of use.

10. **Computer program** comprising program code means for performing all the steps of any one of claim 1 to 9 when said computer program is run on a computer or a mobile terminal device.

11. **Computer program product** comprising program code means stored on a computer readable medium for performing the method of any one of the claims 1 to 9 when said program product is run on a computer or a mobile terminal device.

12. Mobile terminal device (40) for supporting application user interfaces (42) of different resolution and/or size, comprising:
- display (41) for displaying the application user interface (42);
- a detecting means (43) for detecting the resolution and/or size of said application user interface (42) and the size of applications (45, 46) on said application user interface (42); and
- a scaler means (44) operating with said application user interface (42) and applications (45, 46) on said application user interface (42) for scaling a number of options of an option list (45', 46') fitting said resolution and/or size.

13. Mobile terminal device according to claim 12, further comprising an application (45, 46) on said application user interface (42) having an option list (45', 46'), which number of options is scaled by the scaler means in correspondence to a method according to any one of claim 1 to 9.

14. Communication system comprising:
- at least one mobile terminal device according to any one of claim 12 and 13
- an access point in mobile communication for said mobile terminal device and forming part of a network.

15. Communication network according to claim 14 further comprising a server connected to said network

16. Communication network according to claim 14 or 15 further comprising a connection from said access point or said server to the Internet.
